# EUROPEAN PATENT APPLICATION

(11) **EP 4 524 196 A1**
(43) Date of publication of application: **19.03.2025**
(21) Application number: 23807387.8
(22) Date of filing: 24.04.2023
(51) Int. Cl.: C08L 67/02, C08J 5/04, C08J 5/18, C08K 3/013, C08K 5/23, C08L 69/00

(54) **LASER LIGHT-TRANSMITTING RESIN COMPOSITION, MOLDED ARTICLE, AND COMPOSITE MOLDED ARTICLE**

(30) Priority: 17.05.2022 JP 2022080931
(71) Applicant: Polyplastics Co., Ltd., Tokyo 108-8280 (JP)
(72) Inventor: ISOMURA, Takato, Fuji-shi, Shizuoka 416-8533 (JP); NAGAI, Koki, Fuji-shi, Shizuoka 416-8533 (JP)
(74) Representative: Winter, Brandl - Partnerschaft mbB
(86) International application number: PCT/JP2023/016070
(87) International publication number: WO 2023/223775

(57) **Abstract**

**To** provide: a resin composition which is colored black and has high laser light-transmitting properties; and a molded article and a composite molded article which use the same.

Provided is a laser light-transmitting resin composition including a polybutylene terephthalate resin, a polycarbonate resin, and a chromium complex azo dye, wherein: the content of the polycarbonate resin is 60 parts by mass or more and 100 parts by mass or less with respect to 100 parts by mass of the polybutylene terephthalate resin; and the content of the chromium complex azo dye is 0.08 parts by mass or more and 0.50 parts by mass or less with respect to 100 parts by mass of the polybutylene terephthalate resin.

## Description

### TECHNICAL FIELD

The present invention relates to a laser light-transmitting resin composition, a molded article, and a composite molded article.

### BACKGROUND

Polybutylene terephthalate resins have excellent thermal resistance, mechanical strength, dimensional stability, electrical properties, and moldability, and thus, are widely utilized in the electric/electronic field and the automobile field, etc. It is common for resin molded articles to be used in combination with other components, and in recent years, laser welding is often employed to join a resin molded article to another component.

Laser welding is a joining method in which a resin molded article having laser light-transmitting properties and a resin molded article having laser light-absorbing properties are overlaid, one on the other, and welded by irradiating laser light from the side of the resin molded article having laser light-transmitting properties.

Compared to polystyrene resins and polyamide resins, etc., polybutylene terephthalate resins have low laser light-transmitting properties, and therefore, are not suitable for producing laser light-transmitting side molded articles. Additionally, carbon black, which is generally used as a coloring agent to color a resin black, absorbs laser light even when blended in extremely small amounts, and therefore, cannot be used in laser light-transmitting side molded articles. Due thereto, when a laser light-transmitting side molded article is to be colored black, organic dyes and pigments, etc., having laser light-transmitting properties are used. Patent Document 1 discloses a resin composition which is colored black and includes a plurality of chromatic color pigments. Patent Document 2 discloses a resin composition which is colored a dark color and includes a polymer pigment.

Patent Document 1: JP 2006-199861 A
Patent Document 2: JP 2007-297473 A

### SUMMARY OF THE INVENTION

There are very few organic dyes or pigments which have thermal resistance enabling use with polybutylene terephthalate, have high laser light-transmitting properties, and produce a black color. Due thereto, organic dyes or pigments, when blended in a small amount as a single color, produce reds or greens, etc., and it is difficult to produce black. A large blending amount achieves a dark color but greatly reduces the light transmittance of a resin composition. For such reasons, when using organic dyes or pigments, it is necessary to adjust to a black color by combining a plurality of different colored dyes or pigments and blending in the smallest possible amounts. However, polybutylene terephthalate resins have high concealability, and therefore, even when a plurality of types of dyes or pigments are used to achieve a black color, a large amount of dyes or pigments must be blended compared to other resins, which may lead to a further decrease in laser light-transmitting properties.

The present invention addresses a problem of providing: a resin composition which is colored black and has high laser light-transmitting properties; and a molded article and a composite molded article which use the same.

The present invention has the following embodiments.
[1] A laser light-transmitting resin composition including a polybutylene terephthalate resin, a polycarbonate resin, and a chromium complex azo dye, wherein:
   the content of the polycarbonate resin is 60 parts by mass or more
      and 100 parts by mass or less with respect to 100 parts by mass of the polybutylene terephthalate resin; and
   the content of the chromium complex azo dye is 0.08 parts by mass
      or more and 0.50 parts by mass or less with respect to 100 parts by mass of the polybutylene terephthalate resin.
[2] The laser light-transmitting resin composition described in [1], further including a filler, the content of the filler being 10 parts by mass or more and 100 parts by mass or less with respect to 100 parts by mass of the polybutylene terephthalate resin.
[3] The laser light-transmitting resin composition described in [1] or [2], wherein a molded article thereof having a thickness of 1 mm has an L* value in the CIE color system of 20 or less and has a light transmittance at a wavelength of 940 nm of 50% or more.
[4] The laser light-transmitting resin composition described in any one of [1] to [3], wherein the chromium complex azo dye includes Color Index (C.I.) Solvent Black 28.
[5] The laser light-transmitting resin composition described in any one of [1] to [4], wherein the polycarbonate resin has a melt viscosity, at 300°C and a shear rate of 1,000 sec⁻¹, of 0.20 kPa·s or more.
[6] A molded article for laser welding, the molded article including the laser light-transmitting resin composition described in any one of [1] to [5].
[7] The molded article described in [6], wherein the molded article is a laser light-transmitting side molded article.
[8] A composite molded article including the molded article described in [7] and a laser light-absorbing side molded article.

According to the present invention, it is possible to provide: a resin composition which is colored black and has high laser light-transmitting properties; and a molded article and a composite molded article which use the same.

### DESCRIPTION OF EMBODIMENTS

Embodiments of the present invention are explained in detail below. However, the scope of the present invention is not limited to the embodiments explained here, and various modifications can be made within a scope not departing from the gist of the present invention. Further, regarding specific parameters, in the case in which multiple upper limit values and lower limit values are described, a suitable numerical value range can be obtained by combining any of the upper limit values and lower limit values among these upper limit values and lower limit values. In cases where the specific explanation provided for one embodiment applies to another embodiment, the corresponding explanation for the other embodiment may be omitted.

### [Laser light-transmitting resin composition]

A laser light-transmitting resin composition according to the present embodiment (hereinafter referred to simply as the "resin composition") includes a polybutylene terephthalate resin, a polycarbonate resin, and a chromium complex azo dye, wherein the content of the polycarbonate resin is 60 parts by mass or more and 100 parts by mass or less with respect to 100 parts by mass of the polybutylene terephthalate resin, and the content of the chromium complex azo dye is 0.08 parts by mass or more and 0.50 parts by mass or less with respect to 100 parts by mass of the polybutylene terephthalate resin.

By including a polybutylene terephthalate resin, a polycarbonate resin, and a chromium complex azo dye at prescribed amounts, it is possible to achieve a resin composition that is colored black and has high laser light-transmitting properties.

### (Polybutylene terephthalate resin)

Polybutylene terephthalate resins (PBT resins) are obtained by condensation polymerizing a dicarboxylic acid component including at least terephthalic acid or an ester-forming derivative thereof (a C₁₋₆ alkylester, an acid halide, etc.) and a glycol component including an alkylene glycol with at least four carbon atoms (1,4-butanediol) or an ester-forming derivative thereof (an acetylate, etc.). In the present embodiment, the polybutylene terephthalate resin is not limited to homopolybutylene terephthalate resins and may be a copolymer containing 60 mol% or more of butylene terephthalate units.

The amount of terminal carboxy groups in the polybutylene terephthalate resin is preferably 50 meq/kg or less, more preferably 30 meq/kg or less, and even more preferably 25 meq/kg or less.

The intrinsic viscosity of the polybutylene terephthalate resin is not particularly limited as long as the effects of the present invention are not hindered, but is preferably 0.60 dL/g or more and 1.2 dL/g or less and more preferably 0.65 dL/g or more and 0.9 dL/g or less. When a polybutylene terephthalate resin with an intrinsic viscosity in such a range is used, the obtained polybutylene terephthalate resin composition has particularly excellent moldability. Further, the intrinsic viscosity can be adjusted by blending polybutylene terephthalate resins having different intrinsic viscosities. For example, by blending a polybutylene terephthalate resin having an intrinsic viscosity of 1.0 dL/g with a polybutylene terephthalate resin having an intrinsic viscosity of 0.7 dL/g, a polybutylene terephthalate resin having an intrinsic viscosity of 0.9 dL/g can be prepared. The intrinsic viscosity of the polybutylene terephthalate resin can be measured under conditions of, for example, a temperature of 35°C in o-chlorophenol.

In preparing the polybutylene terephthalate resin, when using an aromatic dicarboxylic acid, other than terephthalic acid, or an ester-forming derivative thereof as a comonomer component, for example, a C₈₋₁₄ aromatic dicarboxylic acid such as isophthalic acid, phthalic acid, 2,6-naphthalenedicarboxylic acid, or 4,4'-dicarboxydiphenylether, etc., a C₄₋₁₆ alkanedicarboxylic acid such as succinic acid, adipic acid, azelaic acid, or sebacic acid, etc., a C₅₋₁₀ cycloalkanedicarboxylic acid such as cyclohexanedicarboxylic acid, etc., or an ester-forming derivative of these dicarboxylic acid components (a C₁₋₆ alkylester derivative, acid halide, etc.) can be used. These dicarboxylic acid components may be used alone or in a combination of two or more.

Among these dicarboxylic acid components, a C₈₋₁₂ aromatic dicarboxylic acid such as isophthalic acid, etc., and a C₆₋₁₂ alkanedicarboxylic acid such as adipic acid, azelaic acid, or sebacic acid, etc., are more preferred.

In preparing the polybutylene terephthalate resin, when using a glycol component other than 1,4-butanediol as a comonomer component, for example, a C₂₋₁₀ alkylene glycol such as ethylene glycol, propylene glycol, trimethylene glycol, 1,3-butylene glycol, hexamethylene glycol, neopentyl glycol, or 1,3-octanediol, etc., a polyoxyalkylene glycol such as diethylene glycol, triethylene glycol, or dipropylene glycol, etc., an alicyclic diol such as cyclohexanedimethanol or hydrogenated bisphenol A, etc., an aromatic diol such as bisphenol A or 4,4'-dihydroxybiphenyl, etc., a C₂₋₄ alkylene oxide adduct of bisphenol A such as an ethylene oxide 2-mol adduct of bisphenol A or a propylene oxide 3-mol adduct of bisphenol A, etc., or an ester-forming derivative of these glycols (an acetylate, etc.) can be used. These glycol components may be used alone or in a combination of two or more.

Among these glycol components, a C₂₋₆ alkylene glycol such as ethylene glycol or trimethylene glycol, etc., a polyoxyalkylene glycol such as diethylene glycol, etc., or an alicyclic diol such as cyclohexanedimethanol, etc., is more preferred.

Examples of comonomer components that can be used other than the dicarboxylic acid component and the glycol component include: aromatic hydroxycarboxylic acids such as 4-hydroxybenzoic acid, 3-hydroxybenzoic acid, 6-hydroxy-2-naphthoic acid, and 4-carboxy-4'-hydroxybiphenyl; aliphatic hydroxycarboxylic acids such as glycolic acid and hydroxycaproic acid; C₃₋₁₂ lactones such as propiolactones, butyrolactones, valerolactones, and caprolactones (ε-caprolactone, etc.); and ester-forming derivatives of these comonomer components (C₁₋₆ alkylester derivatives, acid halides, acetylates, etc.).

The content of the polybutylene terephthalate resin is preferably 30 mass% or more and 65 mass% or less, more preferably 35 mass% or more and 60 mass% or less, even more preferably 38 mass% or more and 50 mass% or less, and can also be set so as to be 40 mass% or more and 50 mass% or less of the total mass of the resin composition. In the case of being 30 mass% or more and 65 mass% or less of the total mass of the resin composition, the content of the polybutylene terephthalate resin may be 38 mass%, may be 39 mass%, and may be in a range in which said values are set as the lower limit value or the upper limit value.

### (Polycarbonate resin)

Examples of a polycarbonate resin (PC resin) include polymers obtained by a reaction between a dihydroxy compound and phosgene or a carbonate ester such as diphenyl carbonate. The dihydroxy compound may be an alicyclic compound, etc., such as a cycloaliphatic diol, but is preferably an aromatic compound and more preferably a bisphenol compound. The dihydroxy compound may be used alone or as a combination of two or more.

Examples of the bisphenol compound include: bis(hydroxyaryl)C₁₋₁₀ alkanes such as bis(4-hydroxyphenyl)methane, bis(4-hydroxy-3-methylphenyl)methane, 1,1-bis(4-hydroxyphenyl)ethane, 1,1-bis(4-hydroxy-3-methylphenyl)ethane, 1,1-bis(4-hydroxyphenyl)propane, 2,2-bis(4-hydroxyphenyl)propane (bisphenol A), 2,2-bis(4-hydroxy-3-methylphenyl)propane, 2,2-bis(4-hydroxy-3,5-dimethylphenyl)propane, 2,2-bis(4-hydroxy-3-ethylphenyl)propane, 2,2-bis(4-hydroxy-3-t-butylphenyl)propane, 2,2-bis(4-hydroxy-3-bromophenyl)propane, 2,2-bis(4-hydroxyphenyl)butane, 2,2-bis(4-hydroxyphenyl)-3-methylbutane, 2,2-bis(4-hydroxyphenyl)pentane, 2,2-bis(4-hydroxyphenyl)hexane, 2,2-bis(4-hydroxyphenyl)-4-methylpentane, 2,2-bis(4-hydroxyphenyl)octane, bis(4-hydroxyphenyl)phenylmethane, bis(4-hydroxyphenyl)diphenylmethane, bis(4-hydroxyphenyl)dibenzylmethane, 1,1-bis(4-hydroxyphenyl)-1-phenylpropane, 2,2,2',2'-tetrahydro3,3,3',3'-tetramethyl-1,1'-spirobi-[1H-indene]-6,6'-diol, etc., and preferably bis(hydroxyaryl)C₁₋₆ alkanes; bis(hydroxyaryl)C₄₋₁₀ cycloalkanes such as 1,1-bis(4-hydroxyphenyl)cyclopentane, 1,1-bis(4-hydroxyphenyl)cyclohexane, etc.; dihydroxyaryl ethers such as 4,4'-dihydroxydiphenyl ether, 4,4'-dihydroxy-3,3'-dimethyldiphenyl ether, etc.; dihydroxyaryl sulfones such as 4,4'-dihydroxydiphenyl sulfone, 4,4'-dihydroxy-3,3'-dimethyldiphenyl sulfone, etc.; dihydroxyaryl sulfides such as 4,4'-dihydroxydiphenyl sulfide, 4,4'-dihydroxy-3,3'-dimethyldiphenyl sulfide, etc.; dihydroxyaryl sulfoxides such as 4,4'-dihydroxydiphenyl sulfoxide, 4,4'-dihydroxy-3,3'-dimethyldiphenyl sulfoxide, etc.; and dihydroxyaryl ketones such as 4,4'-dihydroxydiphenyl ketone, 4,4'-dihydroxy-3,3'-dimethyldiphenyl ketone, etc.

A preferred example of the polycarbonate resin is a bisphenol A polycarbonate.

The polycarbonate resin may be a homopolycarbonate and may be a copolycarbonate. The polycarbonate resin may be used alone or as a combination of two or more.

The melt viscosity of the polycarbonate resin at 300°C and a shear rate of 1,000 sec⁻¹ is preferably 0.20 kPa·s or more, more preferably 0.21 kPa·s or more, even more preferably 0.22 kPa·s or more, further preferably 0.24 kPa·s or more, and particularly preferably 0.25 kPa·s or more. Note that the melt viscosity is measured in conformance with ISO 11443.

The content of the polycarbonate resin, with respect to 100 parts by mass of the polybutylene terephthalate resin, is 60 parts by mass or more and 100 parts by mass or less, preferably 65 parts by mass or more and 90 parts by mass or less, more preferably 70 parts by mass or more and 85 parts by mass or less, even more preferably 72 parts by mass or more and 82 parts by mass or less, and particularly preferably 75 parts by mass or more and 80 parts by mass or less. When the content of the polycarbonate resin is less than 60 parts by mass, the laser light-transmitting properties are insufficient and it is not possible for both the resin composition to be colored black and the laser light-transmitting properties thereof to be improved. When the content of the polycarbonate resin exceeds 100 parts by mass, the crystallization of the polybutylene terephthalate resin decreases, and there may be decreases in thermal resistance or chemical resistance and occurrences of poor mold release during molding.

In the range of 60 parts by mass or more and 100 parts by mass or less, the content of the polycarbonate resin, with respect to 100 parts by mass of the polybutylene terephthalate resin, may be 76.1 parts by mass, may be 78.1 parts by mass, may be 78.3 parts by mass, and may be in a range with the foregoing values set as the lower limit value or the upper limit value. The content of the polycarbonate resin may also be within a range obtained by combining the foregoing values.

In one embodiment, the total content of the polybutylene terephthalate resin and the polycarbonate resin in a thermoplastic resin included in the resin composition is, with respect to the total mass of the thermoplastic resin, preferably 80 mass% or more, more preferably 90 mass% or more, and further preferably 100 mass%. In one embodiment, the thermoplastic resin in the resin composition may be formed from only the polybutylene terephthalate resin and the polycarbonate resin (B).

### (Chromium complex azo dye)

The chromium complex azo dye is preferably a 1:2 chromium complex azo dye. Examples thereof include Carbon Index (C.I.) Solvent Black 28 (CAS NO. 12237-23-9), Carbon Index (C.I.) Solvent Black 35 (CAS NO. 61631-53-1), and it is more preferable for one or more selected from the foregoing to be included. In one embodiment, the chromium complex azo dye is preferably Carbon Index (C.I.) Solvent Black 28.

In the same manner as carbon black, when the chromium complex azo dye is blended, even in a small amount, in the polybutylene terephthalate resin, transmittance decreases. However, surprisingly, when the polybutylene terephthalate resin, the polycarbonate, and the chromium complex azo dye are blended in prescribed amounts, it is possible to achieve a resin composition which is colored black and has high laser light-transmitting properties.

Chromium complex azo dyes undergo little sublimation in environments in which polybutylene terephthalate resins are used, and thus, are unlikely to cause any occurrences of operational failures due to contamination even when used in, for example, housings for electronic products, or the like. Further, since there is little color transfer, even in cases in which a molded article of the resin composition is brought into contact with another resin member and stored, there is little contamination of the other resin member, and thus, there is little reduction in design and little dye adherence.

When blended in resins having low transmittance and high concealability like polybutylene terephthalate resins, chromium complex azo dyes lower transmitting properties, and thus, are unsuitable as transmissive materials for laser welding. However, with the resin composition according to the present embodiment, it is possible to achieve a black color with a single color and a small amount, and therefore, a chromium complex azo dye can be used as a coloring agent to be added to a transmissive material for laser welding. Due thereto, productivity increases since it is not necessary to combine and use a plurality of types of dyes, as is the case for conventional organic dyes and pigments, and it is not necessary to investigate types, blending amounts, and blend ratios, etc.

The content of the chromium complex azo dye, with respect to 100 parts by mass of the polybutylene terephthalate resin, is 0.08 parts by mass or more and 0.50 parts by mass or less, preferably 0.09 parts by mass or more and 0.45 parts by mass or less, more preferably 0.10 parts by mass or more and 0.40 parts by mass or less, and further preferably 0.13 parts by mass or more and 0.40 parts by mass or less. When the content of the chromium complex azo dye is less than 0.08 parts by mass, the lightness (L* value) becomes high and it is difficult to achieve a black color. When the content of the chromium complex azo dye exceeds 0.50 parts by mass, laser light-transmitting properties may decrease. In the range of 0.08 parts by mass or more and 0.50 parts by mass or less with respect to 100 parts by mass of the polybutylene terephthalate resin, the content of the chromium complex azo dye may be 0.13 parts by mass, may be 0.39 parts by mass, and may be in a range in which the foregoing values are set as the lower limit value or the upper limit value. The content of the chromium complex azo dye may also be within a range obtained by combining the foregoing values.

The chromium complex azo dye can color the resin composition black alone even without using another dye or pigment. However, in a range not hindering the effects of the present invention, the resin composition may also include another coloring agent other than the chromium complex azo dye. Examples of other coloring agents include organic dyes and pigments, etc. Examples of organic dyes and pigments include yellow pigments (for example, anthraquinone-based yellow pigments), green pigments (for example, phthalocyanine-based green pigments), and purple pigments (for example, perylene-based purple pigments), etc. The organic dyes and pigments may be used alone or in a combination of two or more.

From the perspective of improving laser light-transmitting properties and from the perspective of preventing color transfer of molded articles, a low content of the organic dyes and pigments is preferable. For example, the content is preferably less than 0.40 parts by mass and more preferably less than 0.10 parts by mass with respect to 100 parts by mass of the polybutylene terephthalate resin.

In one embodiment, the resin composition may include a coloring agent including a chromium complex azo dye. In one embodiment, the content of the chromium complex azo dye in the coloring agent is preferably 80 mass% or more, more preferably 90 mass% or more, even more preferably 98 mass%, and may be 100 mass%. In one embodiment, the coloring agent may be made solely of a chromium complex azo dye.

### (Filler)

From the perspective of raising mechanical strength, the resin composition may, as needed, include a filler. Examples of the filler include organic and inorganic fillers, and the filler may, for instance, be a fibrous filler, a tabular filler, or a granular filler. Examples of the fibrous filler include: inorganic fibers such as glass fibers, asbestos fibers, silica fibers, alumina fibers, silica-alumina fibers, aluminum silicate fibers, zirconia fibers, potassium titanate fibers, and whiskers (whiskers of alumina, silicon nitride, or the like), etc.; and organic fibers such as aliphatic or aromatic polyamides, aromatic polyesters, fluororesins, acrylic resins such as polyacrylonitrile, etc., and fibers formed from rayon, etc. Examples of the tabular filler include talc, mica, and glass flakes, etc. Examples of the granular filler include glass beads, glass powder, milled fibers (for example, milled glass fibers, etc.), and wollastonite, etc. Note that the wollastonite may be in a tabular form, a columnar form, or a fibrous form, etc. One type of filler may be used alone and two or more types of fillers may be used in combination. Among the foregoing inorganic fillers, glass fibers are preferable from the perspective of raising thermal resistance and mechanical strength without being detrimental to laser transmitting properties, as well as from the perspective of being cheap and easily available, etc.

The average fiber diameter of the fibrous filler may, for example, be approximately 1 µm or more and 30 µm or less (preferably 3 µm or more and 20 µm or less), and the average fiber length thereof may, for example, be approximately 100 µm or more and 5 mm or less (preferably 300 µm or more and 4 mm or less and further preferably 500 µm or more and 3.5 mm or less). Further, the average primary particle diameter of the tabular or granular filler can be set so as to be, for example, approximately 10 µm or more and 500 µm or less and preferably approximately 15 µm or more and 100 µm or less.

Note that the average fiber diameter and the average fiber length of the fibrous filler, and the average primary particle diameter of the tabular or granular filler are values for the fibrous filler and the tabular or granular filler prior to being blended in the resin composition, obtained by analyzing an image captured by a CCD camera and calculating a weighted average. Said values can be calculated by using, for example, a Dynamic Image Analysis Method/Particle (State) Analyzer PITA-3 manufactured by Seishin Enterprise Co., Ltd., or the like.

The content ratio of the inorganic filler with respect to 100 parts by mass of the polybutylene terephthalate resin is preferably 10 parts by mass or more and 140 parts by mass or less, more preferably 10 parts by mass or more and 100 parts by mass or less, even more preferably 30 parts by mass or more and 100 parts by mass or less, and particularly preferably 50 parts by mass or more and 80 parts by mass or less. When in the range of 10 parts by mass or more and 140 parts by mass or less with respect to 100 parts by mass of the polybutylene terephthalate resin, the content ratio of the inorganic filler may be 76.1 parts by mass, may be 78.1 parts by mass, may be 78.3 parts by mass, and may be in a range with the foregoing values set as the lower limit value or the upper limit value. The content ratio of the inorganic filler may also be within a range obtained by combining the foregoing values.

### (Other additives)

In a range not hindering the effects of the present invention, the resin composition may have blended therein, in order to impart desired properties in accordance with the objective thereof, a publicly-known substance that is generally added to thermoplastic resins and thermosetting resins. For example, it is possible to blend a stabilizer such as an ultraviolet absorbing agent or an antioxidant, etc., a transesterification inhibitor (for example, monocalcium phosphate, or the like), a hydrolysis resistance improver, a plasticizer, an antistatic agent, a flame retardant, a flame retardant aid, a drip prevention agent, a mold release agent, a lubricant, a crystallization promoting agent, or a crystal nucleating agent (for example, boron nitride, or the like).

For example, with an objective of improving hydrolysis resistance, the resin composition may include an epoxy resin. Examples of epoxy resins include biphenyl-type epoxy resins, bisphenol A-type epoxy resins, phenol novolak-type epoxy resins, and cresol novolak-type epoxy resins, etc. One epoxy resin can be used alone or two or more may be used in combination. The content of the epoxy resin, with respect to 100 parts by mass of the polybutylene terephthalate resin, is preferably 1-10 parts by mass, more preferably 1.5-5 parts by mass, and even more preferably 2-4 parts by mass. In the case of being 1-10 parts by mass with respect to 100 parts by mass of the polybutylene terephthalate resin, the content of the epoxy resin may be 2.6 parts by mass and may be in the range in which the foregoing value is used as a lower limit value or an upper limit value.

The resin composition may, as necessary, also contain another thermoplastic resin other than the polybutylene terephthalate resin and the polycarbonate resin.

For example, the resin composition may also include an elastomer such as an olefin-based elastomer, a styrene-based elastomer, a polyester-based elastomer, or a core-shell polymer, etc. Impact resistance can be improved by an elastomer, and adhesion between a laser light-transmitting side molded article and a laser light-absorbing side molded article increases when laser molded due to the elastic modulus decreasing, and thus, weldability can be improved.

The resin composition according to the present embodiment has high laser light-transmitting properties and is excellent with respect to warp deformation, and therefore, enables a resin composition with excellent laser weldability to be obtained even without adding an elastomer. In one embodiment, the elastomer content of the resin composition may be set so as to be, with respect to 100 parts by mass of the polybutylene terephthalate resin, less than 10 parts by mass, may be set so as to be less than 5 parts by mass, and may be set so as to be less than 1 part by mass. In one embodiment, the resin composition can be configured so as not to include an elastomer.

When used together with a polyamide resin, the lightness (L* value) of a polybutylene terephthalate resin becomes high, it becomes difficult to achieve a black color, and laser light-transmitting properties tend to decrease. As such, it is preferable for the polyamide content in the resin composition to be low. In one embodiment, the polyamide content in the resin composition, with respect to 100 parts by mass of the polybutylene terephthalate resin, is preferably less than 10 parts by mass, more preferably less than 5 parts by mass, and even more preferably less than 1 part by mass. In one embodiment, the resin composition preferably does not include a polyamide resin.

In order to further raise the laser light-transmitting properties, the resin composition preferably does not include a laser light-absorbing compound, or the proportion of the laser light-absorbing compound in the resin composition is less than 0.01 mass%. Examples of laser light-absorbing compounds include carbon black, nigrosine, and aniline black, etc.

### (Resin composition)

The method for producing the resin composition is not limited and examples thereof include a method in which a melt-kneading device such as a single- or twin-screw extruder is used to melt-knead and extrude the components to obtain pellets, and a method in which pellets (masterbatch) having different constitutions are prepared and these pellets are blended at prescribed amounts. Note that the pellets may be prepared by, for example, melt-kneading components excluding brittle components (glass-based reinforcing materials, and the like) and then mixing the brittle components.

In one embodiment, the resin composition is colored black and has properties for transmitting laser light when a laser light is irradiated on a molded article that has a thickness of 1-2 mm.

In one embodiment, in a molded article of the resin composition with a thickness of 1 mm, the L* value in the CIE color system is preferably 20 or less and the light transmittance at a wavelength of 940 nm is preferably 50% or more, more preferably 55% or more, and even more preferably 60% or more. When a molded article having a thickness of 1 mm has an L* value in the CIE color system of 20 or less and has a light transmittance at a wavelength of 940 nm of 50% or more, it is possible to obtain a resin composition that is colored black and has extremely high laser light transmitting properties. As a result thereof, it is possible for good joining with a welding target to be achieved by laser welding, and it is possible to achieve an appearance that seems consistent with a welding target that is colored black.

In one embodiment, in a molded article of the resin composition with a thickness of 1 mm, the L* value in the CIE color system may be 15 or less. In said embodiment, in the molded article of the resin composition with a thickness of 1 mm, the light transmittance at a wavelength of 940 nm may be 60% or more.

In another embodiment, in a molded article of the resin composition with a thickness of 1 mm, the light transmittance at a wavelength of 940 nm may be 70% or more. In said embodiment, in the molded article of the resin composition with a thickness of 1 mm, the L* value in the CIE color system may be 20 or less.

The "CIE color system" (1976) is a quantitative method of representing colors specified by the International Commission on Illumination (Commission Internationale de l'Eclairage). The "L* value" is an index representing lightness. The L* value in the CIE color system can be measured by using a spectrophotometer.

In one embodiment, in a molded article of the resin composition with a thickness of 2 mm, the light transmittance at a wavelength of 940 nm is preferably 20% or more and more preferably 25% or more. If the light transmittance at a wavelength of 940 nm is 20% or more in a molded article with a thickness of 2 mm, it is possible for joining with a welding target to be achieved by laser welding. In one embodiment, in a molded article of the resin composition with a thickness of 2 mm, the light transmittance at a wavelength of 940 nm may be 40% or more.

The resin composition according to the present embodiment can be used in various uses in which polybutylene terephthalate resins are used. In particular, the resin composition according to the present embodiment is colored black and has high laser light-transmitting properties, and therefore, can preferably be used in the production of laser light-transmitting side molded articles among molded articles which are to undergo laser welding.

### [Molded article for laser welding]

A molded article for laser welding according to the present embodiment is molded using the laser light-transmitting resin composition described above, and thus, includes the laser light-transmitting resin composition described above. The molded article for laser welding according to the present embodiment includes the laser light-transmitting resin composition described above, and therefore, is colored black and has high laser light-transmitting properties. As a result thereof, the molded article for laser welding according to the present embodiment can be preferably used as a laser light-transmitting side molded article. The laser light-transmitting resin composition is as described above.

The method for molding the molded article for laser welding is not particularly limited and a publicly known molding method can be employed. For example, the molded article for laser welding can be produced by a method in which molding is performed after preparing pellets of the resin composition described above, or a method in which one or more components of the resin composition are directly loaded into a molding machine, etc.

For molding, it is possible to employ a conventional method such as extrusion molding, injection molding, compression molding, blow molding, vacuum molding, rotary molding, or gas injection molding, etc. However, normally, molding is performed by injection molding. The mold temperature during injection molding is normally approximately 40-90°C, preferably approximately 50-80°C, and more preferably approximately 60-80°C.

The shape of the molded article for laser welding is not particularly limited. However, since the molded article for laser welding is to be used by being joined to a counterpart material (another molded article formed from a thermoplastic resin) by laser welding, a shape (for example, a tabular shape) having a contact surface such as a flat surface, or the like is preferred. The molded article for laser welding according to the present embodiment has high transmittance with respect to laser light, and therefore, the thickness of the welded section, that is, the thickness of the molded article at a section that transmits laser light (thickness in the direction that the laser light is transmitted) can be selected from a wide range, for example, approximately 0.1-3.0 mm, and may preferably be approximately 0.5-2.5 mm and more preferably approximately 1.0-2.0 mm.

### [Composite molded article]

A composite molded article according to the present embodiment includes a laser light-transmitting side molded article (hereinafter also referred to as the "first molded article") and a laser light-absorbing side molded article (hereinafter also referred to as the "second molded article"). The laser light-transmitting side molded article uses the molded article for laser welding according to the present embodiment described above. By using the molded article for laser welding described above as the laser light-transmitting side molded article, high bonding strength is obtained when laser welded, and it is also possible to achieve a composite molded article having a color tone consistent with a laser light-absorbing side molded article that is normally colored black by using carbon black, or the like. As the first molded article, the molded article for laser welding is as described above.

It is desirable that the main component of the resin constituting the second molded article is a polyalkylene terephthalate resin. Examples of the polyalkylene terephthalate resin include polybutylene terephthalate resins, polyethylene terephthalate resins, and polytrimethylene terephthalate resins, etc. Here, "main component" means being 50 mass% or more with respect to the total mass of the resin constituting the second molded article. In one embodiment, the content of the polyalkylene terephthalate resin is preferably more than 50 mass% and more preferably 60 mass% or more with respect to the total mass of the resin constituting the second molded article.

Further, the resin constituting the second molded article may also include various kinds of thermoplastic resins. Examples thereof include olefin-based resins, vinyl-based resins, styrene-based resins, acrylic resins, polyester-based resins, polyamide-based resins, polycarbonate-based resins, and the like.

In one embodiment, the second molded article may be configured from a resin (an aromatic polyester-based resin such as a PBT-based resin or a PET-based resin and/or a polycarbonate-based resin) of the same type or same system as the resin constituting the first molded article or a composition thereof.

The second molded article may also include a coloring agent or absorber for laser light. As an absorber, it is normally possible to use a black pigment or dye, in particular, carbon black (for example, acetylene black, lamp black, thermal black, furnace black, channel black, Ketjen black, etc.). The average particle diameter of the carbon black is normally 10-1,000 nm and may preferably be approximately 10-100 nm. The absorber may be used alone or as a combination of two or more. The coloring agent may be selected, as appropriate, in accordance with use, etc. Examples of the coloring agent include inorganic pigments [black pigments such as carbon black (for example, acetylene black, lamp black, thermal black, furnace black, channel black, Ketjen black, etc.), red pigments such as iron oxide red, orange pigments such as molybdate orange, and white pigments such as titanium oxide] and organic pigments (yellow pigments, orange pigments, red pigments, blue pigments, green pigments, etc.). The coloring agent may be used alone or as a combination of two or more.

The ratio of the absorber and the coloring agent, with respect to the entirety of the second molded article, is preferably 0.1-10 mass%, more preferably 0.3-5 mass%, and even more preferably 0.3-3 mass%.

In the composite molded article, the laser light-transmitting side molded article and the laser light-absorbing side molded article are preferably joined and integrated by means of laser welding. It is possible to join and integrate two types of molded articles and achieve a single composite molded article by, for example, bringing the first molded article into contact with the second molded article (in particular, at least surface contact of joining sections), irradiating laser light from the first molded article side to melt the interface between the first molded article and the second molded article and cause the first molded article and the second molded article to adhere, and then cooling. A lens system may be used, as necessary, to concentrate laser light on the interface between the first molded article and the second molded article and weld the contact interface.

The laser light source is not particularly limited, and it is possible to use, for example, a dye laser, a gas laser (excimer laser, argon laser, krypton laser, helium-neon laser, etc.), a solid-state laser (YAG laser, etc.), a semiconductor laser, or the like. A pulse laser is normally used as the laser light.

The irradiation rate of the laser light is not particularly limited, and may be set so as to be, for example, 10-5,000 mm/sec.

### EXAMPLES

The present invention shall be explained still more specifically by referring to the examples below, but interpretation of the present invention is not limited by these examples.

The materials used in the examples and comparative examples are as described below.

### [Materials]

(A) Polybutylene terephthalate
   A-1: Polybutylene terephthalate, manufactured by Polyplastics Co., Ltd., intrinsic viscosity 0.69 dL/g
   A-2: Isophthalic acid 12.5 mol modified polybutylene terephthalate, manufactured by Polyplastics Co., Ltd.
(B) Polycarbonate: polycarbonate (melt viscosity at 300°C and a shear rate of 1,000 sec⁻¹: 0.27 kPa·s), manufactured by Teijin Ltd.
(C) Filler: glass fibers, manufactured by Nippon Electric Glass Co., Ltd., product name ECS03 T-127, average fiber diameter 13 µm, average fiber length 3 mm
(D) Coloring agent
   D-1: Orasol Black X45 (C.I. Solvent Black 28), manufactured by BASF
   D-2: Phthalocyanine-based green pigment (C.I. Pigment Green 7)
   D-3: Anthraquinone-based yellow pigment (C.I. Pigment Yellow 147)
   D-4: Perylene-based purple pigment (C.I. Pigment Violet 29)
(E) Polyamide: 1015B, manufactured by UBE Corporation
(F) Polyester elastomer: Pelprene P-90BD, manufactured by Toyobo Co., Ltd.
(G) Monocalcium phosphate: manufactured by Taihei Chemical Industrial Co., Ltd.
(H) Antioxidant: AO-60RG, manufactured by Chang Chun Petrochemical Co., Ltd.
(I) Epoxy resin: Epikote 1004K, manufactured by Mitsubishi Chemical Group Corporation
(J) Lubricant: L-7640, manufactured by Riken Vitamin Co., Ltd.
(K) Boron nitride: manufactured by JFE Mineral Co., Ltd.
(L) Plasticizer: Adeka Cizer UL-100, manufactured by ADEKA Corporation

### [Examples 1-3 and Comparative Examples 1-8]

After mixing the components with 100 parts by mass of polybutylene terephthalate resin at the ratios shown in Tables 1 and 2, a TEX 30 manufactured by The Japan Steel Works, Ltd., was used to perform melt-kneading and extruding at a cylinder temperature of 260°C, a discharge rate of 15 kg/h, and a screw rotation speed of 130 rpm to obtain resin composition pellets.

### (Molding conditions)

The obtained pellets were injection molded at a cylinder temperature of 260°C and a mold temperature of 80°C using an injection molding machine S-2000i 100B manufactured by Fanuc Corporation to fabricate a test piece (1) measuring 80 mm × 80 mm × 1 mm in thickness, and a test piece (2) measuring 80 mm × 80 mm × 2 mm in thickness.

### [Evaluation]

### (Laser light-transmitting properties)

The test pieces (1) and (2) were each divided into 16 square-shaped pieces measuring 20 mm × 20 mm. A spectrophotometer (product name "V-770", manufactured by Jasco Corporation) was used to measure the light transmittance (%), at a wavelength of 940 nm, at the center of each 20 mm × 20 mm piece. The lowest of the light transmittance values was used as a representative value. The results are shown in Tables 1 and 2.

### (CIE L* value)

A color computer (product name: spectrophotometer SE 6000 manufactured by Nippon Denshoku Industries, Co., Ltd.) was used to measure the CIE color system L* value of the test pieces (1) and (2) under conditions of a hole diameter ϕ of 10 mm and a C-light two degree field of view and reflection. When a test piece has an L* value of 20 or less, the test piece can be assessed as being black. The results are shown in Tables 1 and 2.

### (Color migration (color transfer))

Test pieces for testing color transfer were fabricated as described below.
(1) Cut pieces measuring 20 mm × 20 mm × 1 mm in thickness were cut out from the test piece (1) described above to obtain colored test pieces (3).
(2) 70 mass% of a polybutylene terephthalate resin (manufactured by Polyplastics Co., Ltd., intrinsic viscosity 0.69 dL/g) and 30 mass% of glass fibers (product name ECS03 T-127, manufactured by Nippon Electric Glass Co., Ltd., average fiber diameter 13 µm, average fiber length 3 mm) were mixed and then melt-kneaded and extruded using a TEX 30 manufactured by The Japan Steel Works, Ltd., at a cylinder temperature of 260°C, a discharge rate of 15 kg/h, and a screw rotation speed of 130 rpm to obtain resin composition pellets. The obtained pellets were injection molded at a cylinder temperature of 260°C and a mold temperature of 80°C using an injection molding machine S-2000i 100B manufactured by Fanuc Corporation to obtain a molded article measuring 80 mm × 80 mm × 1 mm in thickness. Cut pieces measuring 20 mm × 20 mm × 1 mm in thickness were cut out from the molded article to obtain non-colored test pieces (4).

One main surface of the colored test piece (3) and one main surface of the non-colored test piece (4) were overlaid, one on the other, and heated for 30 hours at 130°C using a constant temperature bath manufactured by Espec Corp. After allowing to cool to room temperature (26°C), the overlaid surfaces were separated and a visual confirmation was performed to check whether or not there was color migration to the non-colored test piece (4). The results are shown in Tables 1 and 2.

**TABLE 1**

| | EXAMPLE | | |
|---|---|---|---|
| | 1 | 2 | 3 |
| A-1: PBT (IV=0.69) | 100 | 100 | 100 |
| B: PC | 76.1 | 78.1 | 78.3 |
| C: Glass fibers | 76.1 | 78.1 | 78.3 |
| D-1: C.I. Solvent Black 28 | 0.13 | 0.13 | 0.39 |
| G: Monocalcium phosphate | 0.13 | 0.13 | 0.13 |
| I: Epoxy resin | | 2.6 | 2.6 |
| J: Lubricant | 1.3 | 1.3 | 1.3 |
| Lightness L* | 19.75 | 19.75 | 14.03 |
| 940 nm transmittance | | | |
| 1 mmt (%) | 73.5 | 74.4 | 60.0 |
| 2 mmt (%) | 43.1 | 43.2 | 28.1 |
| Color migration (Y/N) | N | N | N |

| | | | |
|---|---|---|---|
| Unit of content: parts by mass | | | |

**TABLE 2**

| | COMPARATIVE EXAMPLE | | | | | | | |
|---|---|---|---|---|---|---|---|---|
| | 1 | 2 | 3 | 4 | 5 | 6 | 7 | 8 |
| A-1: PBT (IV=0.69) | 100 | 100 | 100 | | | 100 | 100 | 100 |
| A-2: PBT | | | | 100 | 100 | | | |
| B: PC | 78.1 | 78.4 | 41.4 | 24.6 | 22.5 | | | 25.0 |
| C: Glass fibers | 78.7 | 78.4 | 62.0 | 60.2 | 55.0 | 46.2 | 46.2 | 61.1 |
| D-1: C.I. Solvent Black 28 | 0.07 | 0.52 | 0.21 | 0.02 | 0.19 | 0.15 | 0.14 | |
| D-2: Green pigment | | | | | | | | 0.35 |
| D-3: Yellow pigment | | | | | | | | 0.04 |
| D-4: Purple pigment | | | | | | | | 0.18 |
| E: PA | | | | | | 7.7 | | |
| F: Elastomer | | | | 10 | 9.2 | | | 10.2 |
| G: Monocalcium phosphate | 0.13 | 0.13 | 0.10 | 0.10 | 0.09 | | | |
| H: Antioxidant | | | | 0.6 | 0.55 | | | 0.6 |
| I: Epoxy resin | 2.6 | 2.6 | 2.1 | 2.0 | 1.8 | | | 2.0 |
| J: Lubricant | 1.3 | 1.3 | 1.0 | | | | | 0.6 |
| K: Boron nitride | | | | 0.02 | 0.02 | | | 0.02 |
| L: Plasticizer | | | | 4.0 | 3.7 | | | 4.1 |
| Lightness L* | 30.67 | 10.24 | 16.59 | 52.50 | 20.14 | 25.19 | 26.2 | 16.98 |
| 940 nm transmittance | | | | | | | | |
| 1 mmt (%) | 78.0 | 46.6 | 48.8 | 47.9 | 30.6 | 4.6 | 3.6 | 35.0 |
| 2 mmt (%) | 46.4 | 18.5 | 18.8 | 21.2 | 4.0 | 0 | o | - |
| Color migration (Y/N) | N | N | N | N | N | N | N | Y |

| | | | | | | | | |
|---|---|---|---|---|---|---|---|---|
| Unit of content: parts by mass | | | | | | | | |

As shown in Table 1, the resin compositions of Examples 1-3 which include a polybutylene terephthalate resin, a polycarbonate resin, and a chromium complex azo dye at prescribed amounts, have, in a 1 mm-thick molded article thereof, an L* value in the CIE color system of 20 or less and a light transmittance at a wavelength of 940 nm of 50% or more, and therefore, are clearly resin compositions that are colored black and have a high laser light transmitting properties. Further, color transfer could not be confirmed even when brought into contact with a non-colored article at a high temperature.

As shown in Table 2, for the resin composition of Comparative Example 1, which has a chromium complex azo dye content that is less than the prescribed amount, the L* value in the CIE color system exceeded 30, and thus, lightness was high and a black color could not be achieved.

For the resin composition of Comparative Example 2, which has a chromium complex azo dye content that is more than the prescribed amount, the L* value in the CIE color system was sufficiently low, and thus, a black color could be achieved. However, a 1 mm-thick molded article thereof has a light transmittance at a wavelength of 940 nm of less than 50%, and thus, the result was that laser light-transmitting properties are low.

Regarding the resin compositions of Comparative Examples 3 and 5 in which the content of the polycarbonate resin is less than the prescribed amount, although in Comparative Example 3 the L* value in the CIE color system is 20 or less, in Comparative Example 5, the L* value exceeds 20. Further, in both Comparative Examples 3 and 5, the light transmittance, at a wavelength of 940 nm, of a molded article with a thickness of 1 mm is less than 50%, and thus, it was not possible both to achieve a black color and to improve laser light-transmitting properties.

For the resin composition of Comparative Example 4, in which the content of the chromium complex azo dye and the content of the polycarbonate are both less than the prescribed amounts, the L* value in the CIE color system exceeded 50, and thus, a black color could not be achieved. Normally, isophthalic acid 12.5 mol modified polybutylene terephthalate has excellent transmitting properties compared to polybutylene terephthalate. However, in Comparative Example 4, in which the content of the polycarbonate resin is less than the prescribed amount, even when the content of the chromium complex azo dye is less than the prescribed amount, the light transmittance, at a wavelength of 940 nm, of a molded article with a thickness of 1 mm is less than 50%, and thus, the result was that laser light-transmitting properties were low.

For the resin composition of Comparative Example 6, which includes the polybutylene terephthalate resin and a polyamide resin instead of the polycarbonate resin, despite the content of the chromium complex azo dye being within the prescribed range, the L* value in the CIE color system exceeded 20, lightness was high, and it was not possible to achieve a black color. Further, the light transmittance, at a wavelength of 940 nm, of a molded article with a thickness of 1 mm is less than 10%, and thus, the result was that laser light-transmitting properties are excessively low.

For the resin composition of Comparative Example 7, which includes only the polybutylene terephthalate resin as a thermoplastic resin, despite the content of the chromium complex azo dye being within the prescribed range, the L* value in the CIE color system exceeded 20, lightness was high, and it was not possible to achieve a black color. Further, the light transmittance, at a wavelength of 940 nm, of a molded article with a thickness of 1 mm is less than 10%, and thus, the result was that laser light-transmitting properties are excessively low.

For the resin composition of Comparative Example 8, in which the content of the polycarbonate resin is less than the prescribed amount and in which three colors of pigments other than the chromium complex azo dye are used, the L* value in the CIE color system is 20 or less, and thus, it is possible to achieve a black color. However, the light transmittance, at a wavelength of 940 nm, of a molded article with a thickness of 1 mm is 40% or less, and thus, the result was that laser light-transmitting properties are low. Additionally, color migration to another resin molded article was confirmed.

### INDUSTRIAL APPLICABILITY

The resin composition according to the present embodiment is colored black and has high laser light-transmitting properties, and therefore, can be suitably used in the production of molded articles for laser welding. Specifically, the resin composition according to the present embodiment can be suitably used as a resin member to be used in fields such as the electric/electronic field and the automobile field, etc., and thus, is industrially applicable.

## Claims

1. A laser light-transmitting resin composition comprising
a polybutylene terephthalate resin, a polycarbonate resin, and a chromium complex azo dye, wherein:
the content of the polycarbonate resin is 60 parts by mass or more and 100 parts by mass or less with respect to 100 parts by mass of the polybutylene terephthalate resin; and
the content of the chromium complex azo dye is 0.08 parts by mass or more and 0.50 parts by mass or less with respect to 100 parts by mass of the polybutylene terephthalate resin.

2. The laser light-transmitting resin composition according to claim 1, further comprising a filler, the content of the filler being 10 parts by mass or more and 100 parts by mass or less with respect to 100 parts by mass of the polybutylene terephthalate resin.

3. The laser light-transmitting resin composition according to claim 1 or 2, wherein a molded article thereof having a thickness of 1 mm has an L* value in the CIE color system of 20 or less and has a light transmittance at a wavelength of 940 nm of 50% or more.

4. The laser light-transmitting resin composition according to claim 1 or 2, wherein the chromium complex azo dye comprises Color Index (C.I.) Solvent Black 28.

5. The laser light-transmitting resin composition according to claim 1 or 2, wherein the polycarbonate resin has a melt viscosity, at 300°C and a shear rate of 1,000 sec⁻¹, of 0.20 kPa·s or more.

6. A molded article for laser welding, the molded article comprising the laser light-transmitting resin composition according to claim 1 or 2.

7. The molded article according to claim 6, wherein the molded article is a laser light-transmitting side molded article.

8. A composite molded article comprising the molded article according to claim 7 and a laser light-absorbing side molded article.
